# EUROPEAN PATENT SPECIFICATION

(11) **EP 4 407 768 B1**
(45) Date of publication and mention of the grant of the patent: **04.02.2026**
(21) Application number: 23305103.6
(22) Date of filing: 27.01.2023
(51) Int. Cl.: H01M 50/209, H01M 50/244, H01M 50/264, H01M 50/291, H01M 50/503, H01M 50/507, H01M 50/516, H01M 50/528, H01M 50/55, H01M 50/557

(54) **IMPROVEMENTS RELATING TO BATTERY CELL ASSEMBLIES**
VERBESSERUNGEN IM ZUSAMMENHANG MIT BATTERIEZELLENANORDNUNGEN
AMÉLIORATIONS RELATIVES À DES ENSEMBLES DE CELLULES DE BATTERIE

(43) Date of publication of application: 31.07.2024
(73) Proprietor: EnerSys Delaware Inc., Reading, PA 19605 (US)
(72) Inventor: KHAMMASSI, Montassar, 62033 Arras (FR); MANOWSKI, Filip, Bielsko-Biala (PL)
(74) Representative: Abel & Imray LLP

(56) References cited:
- CN-A- 115 051 118
- US-A1- 2022 006 160
- US-A1- 2022 059 893

## Description

### Field of the Invention

The present invention concern batteries. More particularly, but not exclusively, this invention concerns a battery cell assembly, a method of assembling a battery cell assembly, and a battery cell mounting frame for use in a battery cell assembly.

### Background of the Invention

Some types of battery comprise a plurality of battery cells with the terminals of the battery cells connected by one or more busbars. Some types of battery cell used in such batteries, for example lithium-ion cells, can exhibit thermal runaway, which can cause the cells to catch fire and even explode in some instances. Thermal runaway can be caused by a short circuit of the cell terminals; this can sometimes happen during the battery assembly process where tools or other electrical conductors, such as fasteners, may be accidentally dropped on or otherwise come into contact with the busbars.

In such batteries the battery cells are typically welded to the busbars. This process requires holding the cells in a fixed position and the use of a welding fixture to also hold the busbars in a fixed position during the welding process. The welding fixture must be assembled and disassembled each time that it is used, which can account for a significant portion of the time that it takes to assemble the battery.

The present invention seeks to mitigate the above-mentioned problems. Alternatively or additionally, the present invention seeks to provide an improved battery cell assembly and method of assembling a battery cell assembly. The present invention also seeks to provide a battery cell mounting frame for use in a battery cell assembly.

US 2022/0059893 Al discloses a battery pack including multiple battery cells, a housing, a first end plate, a second end plate, a bearing plate and an upper cover. The housing is configured for accommodating the multiple battery cells and the two end plates. When the multiple battery cells are sequentially arranged and mounted into the housing, the first end plate and the second end plate are located at two end sides of the sequentially arranged multiple battery cells to laterally fix the multiple battery cells. The bearing plate is mounted above the top portions of the multiple battery cells; and the upper cover is mounted above the housing to cover the upper portion opening of the housing.

### Summary of the Invention

The present invention provides, according to a first aspect, the battery cell assembly recited by the appended claim 1. The battery cell assembly according to the first aspect of the invention is configured such that the battery cells are clamped between a floor of the housing and the mounting frame. This arrangement holds the cells in a fixed position within the housing, thereby preventing the cells moving substantially during the process of welding the cells to one or more busbars.

The first and second battery cells may be clamped by the same shoulder. Alternatively, a different shoulder may be associated with each opening. The openings may be holes or apertures which pass completely through the cell mounting frame. Cells having terminals in different openings may thereby be clamped by different shoulders. The battery cell may be generally cuboidal. Each battery cell may have a main body. The shoulder of the mounting frame may abut a top surface of the main body of each battery cell. The terminal may protrude from the top surface of the main body. Each battery cell may comprise an additional terminal. The additional terminal may be spaced apart from the first terminal and may protrude from the top surface of the main body. An additional battery cell may be positioned adjacent the first battery cell with a base of the additional battery cell resting upon the floor of the cell housing and a terminal of the additional battery cell also positioned in the opening such that the additional battery cell is clamped between the floor of cell housing and the shoulder, or a different, non-contiguous shoulder. In this case a single cell contact plate may be welded to the terminals of both battery cells. The battery cells may be metal ion cells. The battery cells may be Lithium ion cells.

The cell mounting frame may be electrically non-conducting. For example, the cell mounting frame may comprise a suitable thermoplastic or thermosetting polymer. Examples of suitable polymers are nylon, polypropylene, or polyurethane . In some embodiments the cell mounting frame may comprise a fibre-reinforced material. For example, a fibre-reinforced polymer. The fibre reinforcement may, for example, comprise glass fibres or carbon fibres. The mounting frame may comprise an electrically conducting material having a non-electrically conducting coating. The cell mounting frame may be monolithic. Alternatively, the cell mounting frame may be formed from an assembly of component parts. The cell mounting frame may be injection moulded. The cell mounting frame may be compression moulded. In some embodiments of the invention, the cell mounting frame may be machined from a block of suitable material.

The battery cell assembly may comprise one or more cell contact plates. A cell contact plate may be received in the first opening of the cell mounting frame. The cell contact plate may be welded to the terminal of the first battery cell. A cell contact plate may be received in the second opening of the cell mounting frame. The cell contact plate may be welded to the terminal of the second battery cell. The contact plate may be approximately square or rectangular in shape. The contact plates may be substantially the same size as the openings in which they are configured to be received. The contact plates may be substantially the same shape as the openings in which they are configured to be received. Each contact plate may therefore be snugly received in its opening in order to ensure that the contact plate is correctly located with respect to the cell terminal prior to welding. The contact plate may be a busbar. It will be understood that the battery cell assembly of the invention is not limited to a particular size of battery cell. Accordingly, it will be appreciated that in embodiments of the invention, the dimensions of the contact plate(s) may be determined by the size of a cell of the battery cell assembly. For example, the size of the contact plate(s) may be determined the dimensions of a cell terminal and, alternatively or additionally, by the width of a main body of the battery cell (the width of a cell being measured along a direction transverse to the direction along which the terminals of the cell are spaced).

The cell mounting frame may comprise one or more additional openings. One or more additional battery cells may be received in the cell housing with a base of the additional battery cell resting against the floor of the cell housing and a terminal at a top of the additional battery cell received in an additional opening formed in the cell mounting frame. The additional opening may be spaced apart from the first opening. A shoulder of the cell mounting frame may abut a surface of a top of the additional battery cell. The cell mounting frame may be fastened to the cell housing such that each cell of the battery cell assembly is clamped between the floor of cell housing and a shoulder of the cell mounting frame.

Where the battery cell assembly comprises one or more additional cells with terminals being received in one or more additional openings of the cell mounting frame, a cell contact plate may be received in each of the additional openings. A cell contact plate may be welded to a terminal of each of the additional cell(s) received in the opening(s) of the cell mounting frame. The mounting frame may have one or more shoulders. Therefore the same shoulder may exert a clamping force on more than one cell. For example, a single shoulder may be provided by a substantially planar surface which extends along a length of the mounting frame. In this arrangement a single shoulder may exert a clamping force on more than one cell. In some embodiments, a single shoulder may exert a clamping force on all of the cells within the battery cell assembly. Alternatively, discrete shoulders may be provided adjacent each opening of the mounting frame. Each discrete shoulder may exert a clamping force on only the cell(s) associated with the opening. Therefore, in some embodiments a discrete shoulder may exert a clamping forced on only one cell, whereas in other embodiments a discrete shoulder may exert a clamping force on two or more cells.

The cell mounting frame may further comprise a wall positioned between the first opening and the second opening. The wall may protrude in a direction away from the terminals of the first and second cells. The wall may extend continuously between the openings. The wall may extend at least partly around an opening. Where there is more than one opening configured to receive a terminal in the cell mounting frame, a wall may extend at least partly around each of the openings. The wall may extend continuously around an opening. Alternatively, there may be a wall which extends discontinuously around the opening. The wall may advantageously prevent tools or other items accidentally coming into contact with the cell contact plate, or cell terminal, if no contact plate is present. This may prevent accidental damage to the cell or contact plate. Furthermore, the wall may prevent neighbouring contact plates from being accidentally short-circuited. For example, the wall may prevent a dropped item from simultaneously coming into contact with both contact plates and causing a short circuit. Where cells in neighbouring openings in the mounting frame are physically close to one another, the presence of a wall may be used to increase the creepage between the terminals of the neighbouring cells. The wall may therefore enable neighbouring cells to be located closer to one another than would be possible without the presence of a wall, thereby reducing the overall size of the battery assembly. Of course, where there are more than two openings in the cell mounting frame, there may be a wall extending between each of the openings.

In some embodiments the cell mounting frame may be fastened to the cell housing using a plurality of spaced-apart fasteners. In this arrangement each of the fasteners may be fastened to a target torque in order to exert a clamping force on the first cell, second cell, and, optionally, any additional cells. The edge of the cell mounting frame may be a longitudinal edge. The mounting frame may be longer than it is wide. The edge may be spaced apart from the hole along the width direction of the plate. The lip may abut a flat surface of the housing.

The cell mounting frame may comprise a contact plate lip which projects into an opening of the cell mounting frame. The contact plate lip may provide a ledge upon which a contact plate can be rested prior to welding the contact plate to a cell terminal. A first side of a cell contact plate may be in contact with both a battery cell terminal and with the contact plate lip. The shoulder may be positioned on a first side of the opening and the contact plate lip may be positioned on the second, opposite side of the opening. The contact plate lip may be advantageous during the process of assembling the cell assembly whereby, prior to welding to the terminal, the contact plate can be placed in the opening and rested against both the cell terminal and the lip in a position in which the contact plate is ready to be welded to the terminal. A contact plate lip may be provided in one or more, or all of the openings of the cell mounting frame.

In some embodiments of the invention, the mounting frames may comprise integrated cable guides and, alternatively or additionally, cable clips to provide a cable management system. In other embodiments of the invention, nozzles or additional holes may be provided in the mounting frames through which a thermally insulating liquid can be injected into the housing in order to surround the cells within the housing with a thermal insulator. The battery cell, or cells, may be surrounded by a thermal insulator provided within the housing.

The battery cell assembly may comprise a second battery cell mounting frame. The second battery cell mounting frame may comprise any of the features described above with respect to the first cell mounting frame. Each of the battery cells may each comprise a first terminal and a second terminal. The first and second terminals may both extend at the top of the battery cell. The first and second terminals may both extend from the top of a main body of a battery cell. The first mounting frame may receive the first terminals of a plurality of battery cells. The second mounting frame may receive the second terminals of the plurality of battery cells. Where the battery cell assembly comprises more than one battery cell, the cells may be aligned within the housing such that each of the first terminals are aligned along a first axis and such that each of the second terminals are aligned along a second axis.

The present invention provides, according to a second aspect, the battery cell mounting frame recited by the appended claim 7. The battery cell mounting frame of the second aspect of the invention may additionally comprise any of the features of the cell mounting frames described with respect to the first aspect of the invention, and vice versa.

The mounting frame may comprise an elongate plate. The mounting frame may have a length in a longitudinal direction and a width in a transverse direction. The mounting frame may be longer than it is wide. The mounting frame may have longitudinal edges which extend in the longitudinal direction. The mounting frame may have transverse edges which extend in the transverse direction. The first opening may be further configured to receive a cell contact plate into the first opening. The second opening may be further configured to receive a cell contact. The cell contact plate may be received into the opening from a second, opposite side of the mounting frame. The second opening may be spaced apart from the first opening along a longitudinal axis of the mounting frame. The longitudinal axis may be along the length direction of the cell mounting frame.

The battery cell mounting frame may comprise a plurality of openings arranged along the length of the battery cell mounting frame. One or more of the openings may be configured to receive the terminal of only a single cell and a contact plate for welding to a single cell. It will be appreciated that, in embodiments of the invention, the dimensions of the opening may be determined by the size of the contact plate that it is configured to receive. Where the opening is configured to receive only a single cell, the opening may have a length along the longitudinal direction of the mounting frame of between approximately 2 and 7 centimetres. In some embodiments the length may be approximately 3.5 centimetres. Where an opening is configured to receive only a single cell, the opening may have a width along the transverse direction of the mounting frame of between approximately 5 and 15 centimetres. In some embodiments the width may be approximately 7 centimetres.

One or more of the openings may be configured to receive the terminals of two respective battery cells into the opening from a first side of the mounting frame; these openings may be configured to receive a cell contact plate suitable for welding to the terminals of both the battery cells. The cell contact plate may be received into the opening from a second, opposite side of the mounting frame. Where an opening is configured to receive the terminals of two cells, the opening may have a length along the longitudinal direction of the mounting frame of between approximately 5 and 15 centimetres. In some embodiments the length may be approximately 7 centimetres. Where the opening is configured to receive only a single cell, the opening may have a width along the transverse direction of the mounting frame of between approximately 5 and 15 centimetres. In some embodiments the width may be approximately 7 centimetres. The mounting frame may comprise a shoulder configured to abut a top surface of both battery cells when the terminals the respective battery cells are received in the opening from the first side of the mounting frame.

There may be a wall positioned between the first and second openings. The wall may increase the creepage (i.e. the over-surface surface distance) between neighbouring cell terminals. The height of the wall may therefore be determined by a desired creepage, which may be determined by the voltage of the battery cell assembly. The wall may protrude on the second side of the mounting frame. The wall may be between approximately 1 millimetres and 10 millimetres in height. In some embodiments, the wall may be at least 1.5 millimetres in height. In some embodiments, the wall may be at least 3 millimetres in height. In some embodiments, the wall may be at least 8 millimetres in height. Where there are more than two openings, a wall may be situated between each of the openings.

The lip may have a height of between approximately 1 and 5 millimetres. In some embodiments of the invention, the lip may have a height of at least approximately 1.5 millimetres. The lip may have a height of at least approximately 2 millimetres. The lip may have a height of at least approximately 3 millimetres. Where the mounting frame comprises a plate, the lip may protrude from the plate on a first side of the plate.

The battery cell mounting frame may comprise a wall positioned between the fastener hole and an opening of the cell mounting frame. The wall may increase the creepage between a cell terminal and a fastener located within the fastener hole. The wall may protrude on the second side of the mounting frame. The wall may be between approximately 1 millimetres and 10 millimetres in height. In some embodiments, the wall may be at least 1.5 millimetres in height. In some embodiments, the wall may be at least 3 millimetres in height. In some embodiments, the wall may be at least 8 millimetres in height. Where there are more than two openings, a wall may be situated between each of the openings. Where the mounting frame comprises a plate, the wall may protrude from the plate on a second side of the plate.

The battery cell mounting frame may further comprising a lip which extends into an opening. The lip may be configured to support a cell contact plate which has been placed into contact with the terminal of the first battery cell. A contact plate support lip may extend into each opening.

According to a third aspect, the present invention provides the method of manufacturing a battery cell assembly recited by the appended claim 12.

In some embodiments of the invention, the method may comprise the further steps of:
- placing a first cell contact plate in the first opening of the cell mounting frame such that the cell contact plate contacts the terminal of the first battery cell, and
- welding the cell contact plate to the terminal of the first battery cell.

Prior to placing the cell mounting frame over the first and second battery cells, the method may comprise the step of placing a further battery cell in the cell housing with a base of the further battery cell abutting a floor of the cell housing. The method may comprise placing the cell mounting frame over the first battery cell such that a terminal of the further battery cell is received in the first opening or second opening formed in the cell mounting frame and such that a shoulder of the cell mounting frame abuts a surface of the top of the further battery cell.

The method may comprise tightening a fastener connected between the cell mounting frame and the cell housing to clamp the further battery cell between the floor of cell housing and the shoulder. The method may comprise tightening more than one fastener connected between the cell mounting frame and the cell housing to clamp the or each battery cell between the floor of cell housing the shoulder of the cell mounting frame. The or each fastener may be tightened to a predetermined target torque which is calculated to exert a predetermined clamping force on the battery cells.

The method may comprise placing a second cell contact plate in the second opening of the cell mounting frame such that the second cell contact plate contacts the terminal of the second battery cell. The method may comprise welding the second cell contact plate to the terminal of the second battery cell.

The method comprise injecting the housing with a thermally insulating liquid. The liquid may solidify once within the housing.

It will of course be appreciated that features described in relation to one aspect of the present invention may be incorporated into other aspects of the present invention. For example, the method of the invention may incorporate any of the features described with reference to the battery cell assembly or cell mounting frame of the invention and *vice versa.*

### Description of the Drawings

Embodiments of the present invention will now be described by way of example only with reference to the accompanying schematic drawings of which:
FIG. 1 shows a battery cell assembly according to an embodiment of the invention;
FIG. 2 is a cross-sectional view of the battery cell assembly taken in the plane A, which is labelled in FIG. 1;
FIG. 3 is a perspective top view of a cell mounting frame of the battery cell assembly;
FIG. 4 is a perspective bottom view of the cell mounting frame;
FIG. 5 is a flow diagram illustrating the steps of a method of assembling a battery cell assembly according to an embodiment of the invention.
FIG. 6 is a partial view of the cross-section of FIG. 2 shown without the busbar and without the fastener used to secure the cell mounting frame to the housing of the battery cell assembly;
FIG. 7 corresponds to FIG. 6, but with the busbar and fastener used to secure the cell mounting frame to the housing of the battery cell assembly both in place; and
FIG. 8 is an enlarged view of the area contained within the box labelled B in FIG. 7.

### Detailed Description

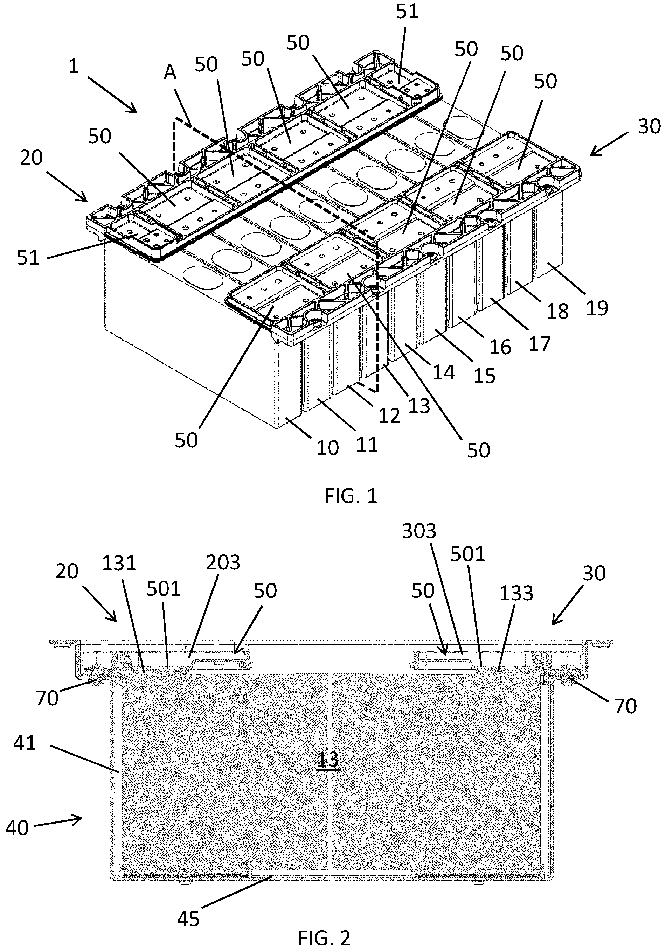

A battery cell assembly 1 according to a first embodiment of the invention is shown in FIG. 1. The battery cell assembly comprises ten battery cells 10-19 which are welded to a busbar arrangement held by a first cell mounting frame 20 and a second cell mounting frame 30. In this embodiment, the battery cells are lithium ion battery cells, but the skilled person will appreciate that the invention is equally applicable to any battery cells with terminals that are welded to a busbar. The cells 10-19 are contained within a housing 40 which comprises a bucket-like recess 41 in which cells 10-19 are contained. The cells sit upon a floor at a base 45 of the recess 41, with their terminals protruding out of the top of the recess 41. The housing 40 is not shown in FIG. 1, but is shown in FIG. 2, which is a cross-sectional view of the battery cell assembly 1 taken in the plane labelled A in FIG. 1 which passes through battery cell 13. As can be seen in FIG. 2, the cell mounting frames 20, 30 are fastened to the housing 40 with bolts 70 in order to secure the cells 10-19 within the housing 40. The skilled person will appreciated that in other embodiments of the invention other methods for fastening mounting frames to the housing may be used.

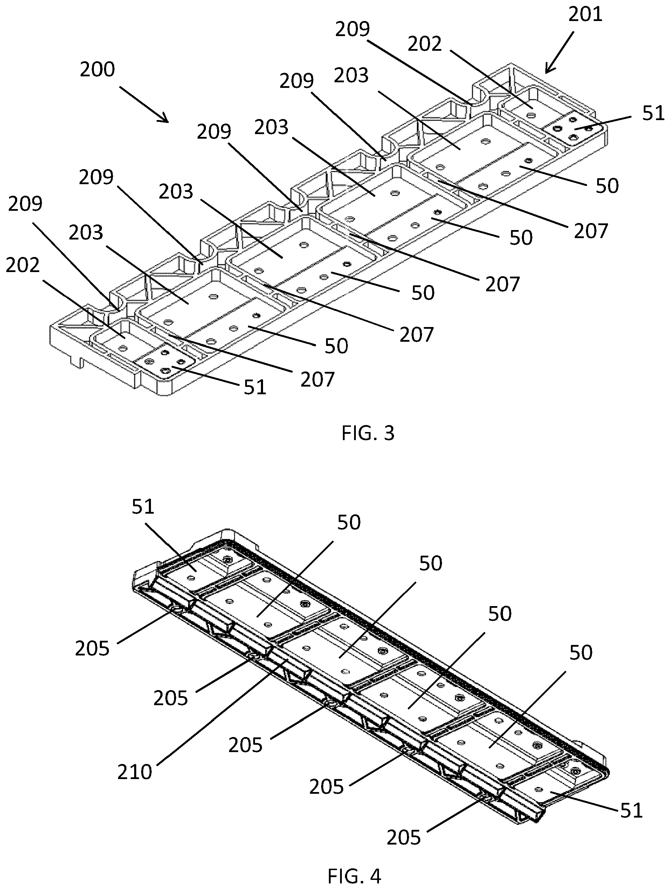

The cell mounting frames 20, 30 are substantially identical (except where described below), so will be described here with reference only to the first cell mounting frame 20 which is shown in FIGS. 3 and 4. The first cell mounting frame 20 comprises an elongate injection moulded plate 201 formed from nylon. The skilled person will be aware of other polymers or other suitable electrically non-conducting materials and manufacturing methods for forming the plate 201. The plate 201 has a length in a longitudinal direction and a shorter width in a transverse direction. The plate 201 is formed with a plurality of openings 202, 203 along the length of the plate 201 (as shown in in FIG. 1) which are shaped to received busbars 50, 51 for connecting to the cells, as described in more detail below (it should be noted that the busbars 50, 51 are shown within their corresponding openings in FIGS. 2 and 4). Openings 203 having a larger dimension along the length of the plate are provided to receive busbars 50 which are connected between neighbouring cells, whereas smaller openings 202 are provided to receive the smaller busbars 51 which are connected to only one cell. The only substantial difference between the first cell mounting frame 20 and the second cell mounting frame 30, is that the second cell mounting frame 30 is configured to accommodate only larger busbars 50 which are connected between neighbouring cells, so all of the openings provided in the mounting frame 30 are substantially the same size. As discussed below, this is due to the fact that the number and types of opening in the mounting frames is determined by the number of cells present in the battery cell assembly. In principle, it is within the scope of the invention for the battery cell assembly to have any practical number of cells.

A plurality of holes 205 are arranged along the length of the plate 201 for fastening the mounting frame 20 to the housing 40 via fasteners 70, the holes 205 being spaced apart from the openings 202, 203 in the width direction of the plate 201. The plate 201 is formed with a plurality of flanges on its upper surface which provide walls 207 between the neighbouring openings 202, 203, and walls 209 between the openings and the holes 205. On the lower surface, the plate 201 is provided with a shoulder 210 which runs along the length of the plate 201, between the holes 205 and the openings 202, 203, which is configured such that the shoulder 210 forms an edge of each of the openings 202, 203.

The cells 10-19 are each connected to the cell mounting frames 20, 30 in substantially the same way, so the connection arrangement between the cells 10-19 and the mounting frames 20, 30 is described here with reference to the cell 13 shown in FIG. 2 only. The cell 13 comprises a first terminal 131 welded to a busbar 50 which is received in an opening 203 of the first mounting frame 20 and second terminal 133 welded to a busbar 50 which is received in an opening 303 of the second mounting frame 30. The busbars 50 comprise aluminium, but the skilled person will appreciate that alternative conducting materials, such as copper, may be used. Each of the terminals 131, 133 protrudes from the main body 135 of the cells 10 and 12 in the respective openings 203, 303. The busbars 50 each include a contact plate 501 which is welded to the flat top section of each respective terminal 131, 133. As can be seen in FIG. 1, similar busbars 50 are connected between the terminals of all of the cells 10-19 in order to electrically connect the cells 10-19 in series. A first smaller busbar 51 is connected to the first terminal only of cell 10, which is situated at a first side of the battery cell assembly 1, and a second smaller busbar 51 is connected to the first terminal only of cell 19, which is situated at a second, opposite side of the battery cell assembly. While the battery cell assembly of the presently described embodiment of the invention comprises ten cells, in other embodiments of the invention a battery cell assembly may have more or fewer cells. The skilled person will appreciate that the number and size of openings in each of the mounting frames will be determined by the number of cells in the battery cell assembly of the invention.

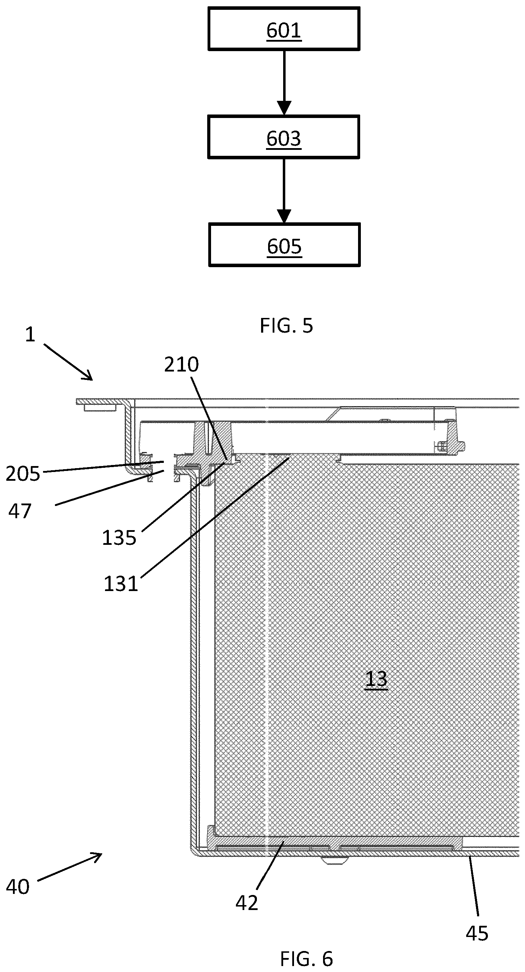

A method of assembling a battery cell assembly 1 according to an embodiment of the invention is shown in FIG. 5. In a first step 601, the cells 10-19 are placed in the housing 40, where they are sat on a seat 42 which forms the floor of the housing 40, as can be best seen in FIG. 6. The seat 42 is shaped to conform with the shape of the cells in order to prevent lateral or longitudinal movement of the cells 10-19 within the recess 40. However, in other embodiments of the invention, the cells 10-19 may be sat directly on the base 45 of the recess 41. In this configuration, the terminals of the cells 10-19 protrude out of the recess 41 provided by the housing. The mounting frames 20, 30 and busbars 50, 51 are then put in place on top of the cells 10-19 and housing 40 in step 603, and the busbars 50, 51 are then welded to the cells 10-19 in step 605. The process of installing the mounting frames 20, 30 and subsequently welding the busbars 50, 51 to the cells 10-19 is substantially identical for each mounting frame 20, 30, so this process described here with reference to the first mounting frame 20 only.

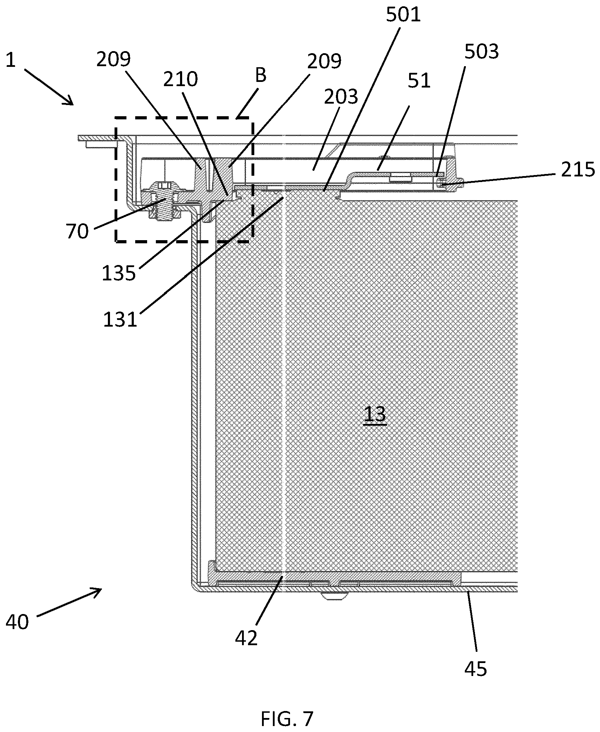

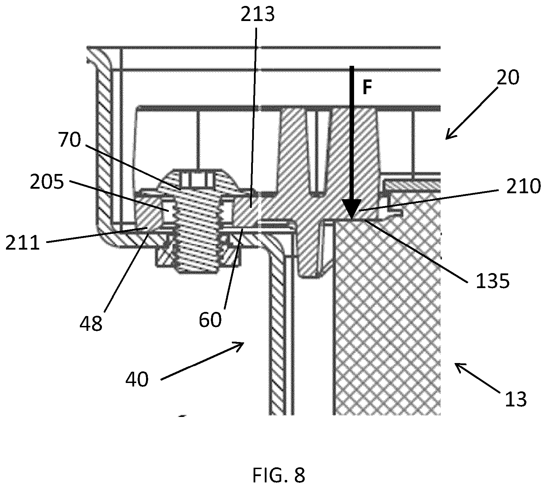

The first mounting frame 20 is placed over the top of the cells 10-19 such that the first terminal of each cell 10-19 is received within a corresponding opening 202, 203 of the mounting frame 20 and such that the shoulder 210 of the mounting frame 20 rests against the upper surface of the cells 10-19, adjacent the first terminal. This situation can be best seen in FIG. 6, which shows the shoulder 210 of the mounting frame 20 resting against the upper surface 135 at the edge of the cell 13, adjacent the terminal 131. The mounting frame 20 is then used to clamp the cells 10-19 in a fixed position within the housing 40 using fasteners 70 which are placed through each of the holes 205 of the mounting frame 20 and corresponding holes 47 in the housing and then tightened; this configuration is shown in FIG. 7. An enlarged partial view of FIG. 7 is shown in FIG. 8 in order to illustrate how the mounting frame 20 is used to clamp the cells 10-19 in a fixed position within the housing 40. As can be seen, the mounting frame 20 is provided with a lip 211 which protrudes from a lower surface of the mounting frame 20, adjacent to each of the holes 205. The lip runs along the length of the mounting frame 20. When the mounting frame 20 is placed over the cells 10-19 so that the shoulder 210 rests against the cells, the lip 211 rests against a flat surface 48 provided by the housing creating a space 60 between the mounting frame 20 and the flat surface 48 in the region 213 of the mounting frame 20 situated between the holes 205 and the shoulder 210. Tightening of the fasteners 70 thereby closes the space 60 and creates a downward clamping force F, indicated in FIG. 8, which is imparted on the cells 10-19 by the shoulder 210. The clamping force F clamps the cells 10-19 against the seats 42 on the floor 45 of the housing. As mentioned above, the second mounting frame 30 is used to clamp the cells 10-19 against the floor of the housing in substantially the same way. This arrangement advantageously holds the cells in a fixed position in order to facilitate the subsequent process of welding the busbars 50, 51 to the terminals of the cells. In some embodiments of the invention, the fasteners 70 may be tightened to a predetermined target torque in order to impart a predetermined clamping force F on the cells. Over-tightening the fasteners 70 may damage the cells 10-19, whereas under-tightening the fasteners 70 may result in the clamping force F not being sufficient to hold the cells 10-19 in a fixed position within the housing 40.

Subsequent to the step of clamping the cells 10-19 in a fixed position within the housing 40, the busbars 50, 51 are placed into each of the openings 202, 203 provided in the mounting frame 20. The openings 202, 203 are shaped to receive the busbars 50, 51 with a close-fit, such that the busbars 50, 51 are not able to substantially move within the openings 202, 203. Furthermore, as can be best seen in FIG. 7, the openings 202, 203 of the mounting frame 20 are formed with a lip 215 which projects into the opening 203 and upon which an end 503 of the busbar rests, with the contact plate 501 of the busbar 501 resting against the flat surface of the cell terminal 131. With the cells 10-19 clamped in a fixed position in the housing, and the busbars 50, 51 received in the openings 202, 203, the busbars 50, 51 are rested against the terminals in a position ready for welding, and are therefore unable to move substantially with respect to the terminals of the cells 10-19. In a final step, the busbars 50, 51 are laser welded to the terminals of the cells 10-19. The skilled person will of course appreciate that other suitable welding processes may be used into order to fix the busbars to the terminals of the cells 10-19. It should be noted that the walls 207, 209 on the upper surface of the mounting frames project above the busbars 50, 51 and above the fixed fasteners 70 in order to reduce the chances of a tool or other electrically conducting implement dropped in the assembly process short-circuiting the cells. Furthermore, the walls 207 increase the creepage between the neighbouring cells (i.e. the shortest distance along the surface of the mounting frame 20 between the cells). In other embodiments of the invention comprising higher voltage battery cells, the heights of the walls 207, 209 may therefore be increased to further increase the creepage.

Ideally, both mounting frames 20, 30 are fastened to the housing before welding of the busbars 50, 51 takes place. However, it is within the scope of the invention for one of the mounting frames 20, 30 to be fastened to the housing and the busbars 50, 51 of that mounting frame to be welded to the cells 10-19 prior to the other one of the mounting frames 20, 30 being fastened to the housing.

Whilst the present invention has been described and illustrated with reference to particular embodiments, it will be appreciated by those of ordinary skill in the art that the invention lends itself to many different variations not specifically illustrated herein. For example, in another embodiment of the invention which is similar to the battery cell assembly 1 described above, the two mounting frames 20, 30 are provided by a single plate. In some embodiments of the invention, the mounting frames may comprise integrated cable guides and, alternatively or additionally, cable clips to provide a cable management system. In other embodiments of the invention, nozzles or additional holes may be provided in the mounting frames through which a thermally insulating liquid can be injected into the housing in order to surround the cells within the housing with a thermal insulator. The method of assembling the battery cell assembly may therefore comprise an additional step of injecting the housing with a thermally insulating liquid, which may solidify once within the housing.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A battery cell assembly (1) comprising a cell housing (40), a cell mounting frame (20, 30), a first battery cell (10-19), and a second battery cell (10-19), wherein
the first battery cell (10-19) and the second battery cell (10-19) are received in the cell housing (40) with a base of each of the first battery cell (10-19) and second battery cell (10-19) resting against a floor (42) of the cell housing (40);
a terminal (131, 133) extending from the top of the first battery cell (10-19) is received in a first opening (203, 303) formed in the cell mounting frame (20, 30) and a terminal (131, 133) extending from the top of the second battery cell (10-19) is received in a separate second opening (203, 303) formed in the cell mounting frame (20, 30); and
the cell mounting frame (20, 30) is fastened to the cell housing (40) using a fastener (70) which passes through a fastener hole (205) of the cell mounting frame (20, 30);
**characterised in that**
the terminal (131, 133) extending from the top of the first battery cell (10-19) is received in the first opening (203, 303) such that a shoulder (210) of the cell mounting frame (20, 30) abuts a surface (135) of the top of the first battery cell (10-19);
the terminal (131, 133) extending from the top of the second battery cell (10-19) is received in the second opening (203, 303) such that a shoulder (210) of the cell mounting frame (20, 30) abuts a surface (135) of the top of the second battery cell (10-19);
the cell mounting frame (20, 30) further comprises a lip (211), the lip (211) being positioned between the fastener hole (205) and an edge of the cell mounting frame (20, 30) such that the lip (211) is positioned on a first side of the fastener hole (205) and the first and second openings are positioned on an opposite second side of the fastener hole (205);
the fastener (70) is fastened to a target torque such that the first battery cell (10-19) and second battery cell (10-19) are clamped between the floor (42) of cell housing (40) and the shoulder (210) of the cell mounting frame (20, 30);
a clamping force exerted on the first cell and the second cell by the floor of cell housing (40) and the shoulder (210) of the cell mounting frame (20, 30) is adjustable by adjusting the target torque; and
the lip (211) of the cell mounting frame (20, 30) is compressed against the cell housing (40) when the fastener (70) is fastened to the target torque.

2. A battery cell assembly according to claim 1 further comprising at least one cell contact plate, wherein the at least one cell contact plate is received in the first opening or second opening of the cell mounting frame and is welded to the terminal of the respective one of the first or second battery cells.

3. A battery cell assembly according to claim 1 or claim 2, wherein the cell mounting frame further comprises a wall positioned between the first and second openings, the wall protruding in a direction away from the terminals of the first and second cells.

4. A battery cell assembly according to claim 3, wherein the wall has a height of at least approximately 1.5 millimetres.

5. A battery cell assembly according to any preceding claim, wherein, when the fastener is fastened to the target torque, the lip is compressed against the housing on a first side of the fastener hole and the mounting frame is spaced apart from the housing on a second side of the fastener hole.

6. A battery cell assembly according to any preceding claim further comprising a third battery cell, wherein the third battery cell is received in the cell housing with a base of the third battery cell resting against a floor of the cell housing, wherein a terminal extending from the top of the third battery cell is received in one of the first or second openings formed in the cell mounting frame such that a shoulder of the cell mounting frame abuts a surface of a top of the third battery cell, and wherein the cell mounting frame is fastened to the cell housing such that the third battery cell is clamped between the floor of cell housing and the shoulder of the cell mounting frame.

7. A battery cell mounting frame suitable for use as the cell mounting frame according to any preceding claim comprising:
a first opening configured to receive a terminal of a first battery cell into the first opening from a first side of the mounting frame,
a second opening configured to receive a terminal of a second battery cell into the second opening from a first side of the mounting frame,
one or more shoulders positioned on a first side of the mounting frame, the one or more shoulders being configured to abut a top surface of the first battery cell when a terminal of the first battery cell is received in the first opening from the first side of the mounting frame, and to abut a top surface of the second battery cell when a terminal of the second battery cell is received in the second opening from the first side of the mounting frame; and
a lip, the lip being positioned between a fastener hole of the cell mounting frame and an edge of the cell mounting frame such that the lip is positioned on a first side of the fastener hole and the first and second openings are positioned on an opposite second side of the fastener hole, wherein the lip protrudes on the first side of the cell mounting frame.

8. A battery cell mounting frame according to claim 7, wherein the at least one of the first opening and second opening is further configured to receive a cell contact plate from a second, opposite side of the mounting frame.

9. A battery cell mounting frame according to claim 7 or claim 8, further comprising a wall positioned between the first and second openings, wherein the wall protrudes on the second side of the mounting frame.

10. A battery cell mounting frame according to any of claims 7 to 9, further comprising a wall positioned between the fastener hole and at least one of the first and second openings, wherein the wall protrudes on the second side of the mounting frame.

11. A battery cell mounting frame according to any of claims 7 to 10 further comprising a lip which extends into one of the first or second openings, wherein the lip is configured to support a cell contact plate which has been placed into contact with the terminal of the respective first or second battery cells.

12. A method of manufacturing a battery cell assembly comprising the steps of:
- placing a first battery cell and a second battery cell in a cell housing with a base of the first battery cell and a base of the second battery cell abutting a floor of the cell housing,
- placing a cell mounting frame according to claim 7 over the first battery cell such that a terminal of the first battery cell is received in the first opening of the cell mounting frame and a terminal of the second battery cell is received in the second opening of the cell mounting frame, and such that one or more shoulders of the cell mounting frame abut a surface of the top of the first battery cell and a surface of a top of the second battery cell, and
- fastening the cell mounting frame to the cell housing, using a fastener which passes through the fastener hole of the cell mounting frame, by tightening the fastener to a target torque to compress the lip of the cell mounting frame against the cell housing and clamp the first and second battery cells between the floor of cell housing and the one or more shoulders of the cell mounting frame.

13. The method of claim 12 comprising the further steps of:
- placing a first cell contact plate in the first opening of the cell mounting frame such that the cell contact plate contacts the terminal of the first battery cell, and
- welding the cell contact plate to the terminal of the first battery cell.

## Patentansprüche

1. Batteriezellenanordnung (1), umfassend ein Zellengehäuse (40), einen Zellenbefestigungsrahmen (20, 30), eine erste Batteriezelle (10-19) und eine zweite Batteriezelle (10-19), wobei
die erste Batteriezelle (10-19) und die zweite Batteriezelle (10-19) in dem Zellengehäuse (40) aufgenommen sind, wobei eine Basis einer jeden der ersten Batteriezelle (10-19) und der zweiten Batteriezelle (10-19) an einem Boden (42) des Zellengehäuses (40) anliegt,
ein Anschluss (131, 133), der sich von der Oberseite der ersten Batteriezelle (10-19) erstreckt, in einer ersten Öffnung (203, 303) aufgenommen wird, die in dem Zellenbefestigungsrahmen (20, 30) ausgebildet ist, und ein Anschluss (131, 133), der sich von der Oberseite der zweiten Batteriezelle (10-19) erstreckt, in einer separaten, zweiten Öffnung (203, 303) aufgenommen wird, die in dem Zellenbefestigungsrahmen (20, 30) ausgebildet ist, und
der Zellenbefestigungsrahmen (20, 30) unter Verwendung eines Befestigungselements (70), das durch ein Befestigungsloch (205) des Zellenbefestigungsrahmens (20, 30) hindurchgeführt wird, am Zellengehäuse (40) befestigt ist,
**dadurch gekennzeichnet, dass**
der Anschluss (131, 133), der sich von der Oberseite der ersten Batteriezelle (10-19) erstreckt, in der ersten Öffnung (203, 303) so aufgenommen wird, dass eine Schulter (210) des Zellenbefestigungsrahmens (20, 30) an einer Oberfläche (135) der Oberseite der ersten Batteriezelle (10-19) anliegt,
der Anschluss (131, 133), der sich von der Oberseite der zweiten Batteriezelle (10-19) erstreckt, in der zweiten Öffnung (203, 303) so aufgenommen wird, dass eine Schulter (210) des Zellenbefestigungsrahmens (20, 30) an einer Oberfläche (135) der Oberseite der zweiten Batteriezelle (10-19) anliegt,
der Zellenbefestigungsrahmen (20, 30) ferner eine Lippe (211) umfasst, wobei die Lippe (211) zwischen dem Befestigungsloch (205) und einer Kante des Zellenbefestigungsrahmens (20, 30) positioniert ist, so dass die Lippe (211) an einer ersten Seite des Befestigungslochs (205) positioniert ist und die erste und die zweite Öffnung an einer gegenüberliegenden zweiten Seite des Befestigungslochs (205) positioniert sind,
das Befestigungselement (70) auf ein Solldrehmoment festgezogen ist, so dass die erste Batteriezelle (10-19) und die zweite Batteriezelle (10-19) zwischen dem Boden (42) des Zellengehäuses (40) und der Schulter (210) des Zellenbefestigungsrahmens (20, 30) eingeklemmt sind,
eine Klemmkraft, die durch den Boden des Zellengehäuses (40) und die Schulter (210) des Zellenbefestigungsrahmens (20, 30) auf die erste Zelle und die zweite Zelle ausgeübt wird, durch Einstellen des Solldrehmoments angepasst werden kann, und
die Lippe (211) des Zellenbefestigungsrahmens (20, 30) gegen das Zellengehäuse (40) gedrückt wird, wenn das Befestigungselement (70) auf das Solldrehmoment festgezogen wird.

2. Batteriezellenanordnung gemäß Anspruch 1, die ferner mindestens eine Zellenkontaktplatte umfasst, wobei die mindestens eine Zellenkontaktplatte in der ersten Öffnung oder der zweiten Öffnung des Zellenbefestigungsrahmens aufgenommen und mit dem Anschluss der jeweiligen ersten oder zweiten Batteriezelle verschweißt ist.

3. Batteriezellenanordnung gemäß Anspruch 1 oder Anspruch 2, wobei der Zellenbefestigungsrahmen ferner eine Wand umfasst, die zwischen der ersten und der zweiten Öffnung positioniert ist, wobei die Wand in einer Richtung weg von den Anschlüssen der ersten und der zweiten Zelle hervorsteht.

4. Batteriezellenanordnung gemäß Anspruch 3, wobei die Wand eine Höhe von mindestens etwa 1,5 Millimetern aufweist.

5. Batteriezellenanordnung gemäß einem vorhergehenden Anspruch, wobei, wenn das Befestigungselement auf das Solldrehmoment festgezogen wird, die Lippe gegen das Gehäuse auf einer ersten Seite des Befestigungslochs gedrückt wird und der Befestigungsrahmen auf einer zweiten Seite des Befestigungslochs vom Gehäuse beabstandet ist.

6. Batteriezellenanordnung gemäß einem vorhergehenden Anspruch, ferner umfassend eine dritte Batteriezelle, wobei die dritte Batteriezelle in dem Zellengehäuse aufgenommen ist, wobei eine Basis der dritten Batteriezelle an einem Boden des Zellengehäuses anliegt, wobei ein Anschluss, der sich von der Oberseite der dritten Batteriezelle erstreckt, in einer der ersten oder zweiten Öffnungen aufgenommen ist, die in dem Zellenbefestigungsrahmen ausgebildet sind, so dass eine Schulter des Zellenbefestigungsrahmens an einer Oberfläche einer Oberseite der dritten Batteriezelle anliegt, und wobei der Zellenbefestigungsrahmen so am Zellengehäuse befestigt ist, dass die dritte Batteriezelle zwischen dem Boden des Zellengehäuses und der Schulter des Zellenbefestigungsrahmens eingeklemmt ist.

7. Batteriezellen-Befestigungsrahmen, der zur Verwendung als Zellenbefestigungsrahmen gemäß einem vorhergehenden Anspruch geeignet ist, umfassend:
eine erste Öffnung, die so konfiguriert ist, dass sie einen Anschluss einer ersten Batteriezelle in die erste Öffnung von einer ersten Seite des Befestigungsrahmens aufnimmt,
eine zweite Öffnung, die so konfiguriert ist, dass sie einen Anschluss einer zweiten Batteriezelle in die zweite Öffnung von einer ersten Seite des Befestigungsrahmens aufnimmt, und
eine oder mehrere Schultern, die an einer ersten Seite des Befestigungsrahmens positioniert sind, wobei die eine oder mehreren Schultern so konfiguriert sind, dass sie an einer Oberseite der ersten Batteriezelle anliegen, wenn ein Anschluss der ersten Batteriezelle in der ersten Öffnung von der ersten Seite des Befestigungsrahmens aufgenommen wird, und an einer Oberseite der zweiten Batteriezelle anliegen, wenn ein Anschluss der zweiten Batteriezelle in der zweiten Öffnung von der ersten Seite des Befestigungsrahmens aufgenommen wird, und
eine Lippe, wobei die Lippe zwischen einem Befestigungsloch des Zellenbefestigungsrahmens und einer Kante des Zellenbefestigungsrahmens positioniert ist, so dass die Lippe an einer ersten Seite des Befestigungslochs positioniert ist und die erste und die zweite Öffnung an einer gegenüberliegenden zweiten Seite des Befestigungslochs positioniert sind, wobei die Lippe an der ersten Seite des Zellenbefestigungsrahmens hervorsteht.

8. Batteriezellen-Befestigungsrahmen gemäß Anspruch 7, wobei die mindestens eine der ersten und der zweiten Öffnung ferner so konfiguriert ist, dass sie eine Zellenkontaktplatte von einer zweiten, gegenüberliegenden Seite des Befestigungsrahmens aufnimmt.

9. Batteriezellen-Befestigungsrahmen gemäß Anspruch 7 oder Anspruch 8, ferner umfassend eine zwischen der ersten und zweiten Öffnung positionierte Wand, wobei die Wand an der zweiten Seite des Befestigungsrahmens hervorsteht.

10. Batteriezellen-Befestigungsrahmen gemäß einem der Ansprüche 7 bis 9, ferner umfassend eine zwischen dem Befestigungsloch und wenigstens einer der ersten und zweiten Öffnungen positionierte Wand, wobei die Wand an der zweiten Seite des Befestigungsrahmens hervorsteht.

11. Batteriezellen-Befestigungsrahmen gemäß einem der Ansprüche 7 bis 10, ferner umfassend eine Lippe, die sich in eine der ersten oder zweiten Öffnungen erstreckt, wobei die Lippe so konfiguriert ist, dass sie eine Zellenkontaktplatte stützt, die mit dem Anschluss der jeweiligen ersten oder zweiten Batteriezelle in Kontakt gebracht wurde.

12. Verfahren zur Herstellung einer Batteriezellenanordnung, umfassend die folgenden Schritte:
- Anordnen einer ersten Batteriezelle und einer zweiten Batteriezelle in einem Zellengehäuse, wobei eine Basis der ersten Batteriezelle und eine Basis der zweiten Batteriezelle an einem Boden des Zellengehäuses anliegen,
- Anbringen eines Zellenbefestigungsrahmens gemäß Anspruch 7 über der ersten Batteriezelle, so dass ein Anschluss der ersten Batteriezelle in der ersten Öffnung des Zellenbefestigungsrahmens aufgenommen wird und ein Anschluss der zweiten Batteriezelle in der zweiten Öffnung des Zellenbefestigungsrahmens aufgenommen wird, und so, dass eine oder mehrere Schultern des Zellenbefestigungsrahmens an einer Oberfläche der Oberseite der ersten Batteriezelle und einer Oberfläche einer Oberseite der zweiten Batteriezelle anliegen, und
- Befestigen des Zellenbefestigungsrahmens am Zellengehäuse unter Verwendung eines Befestigungselements, das durch das Befestigungsloch des Zellenbefestigungsrahmens hindurchgeführt wird, durch Anziehen des Befestigungselements auf ein Solldrehmoment, um die Lippe des Zellenbefestigungselements gegen das Zellengehäuse zu drücken und die erste und die zweite Batteriezelle zwischen dem Boden des Zellengehäuses und der einen oder mehreren Schultern des Zellenbefestigungsrahmens einzuklemmen.

13. Verfahren gemäß Anspruch 12, das die folgenden weiteren Schritte umfasst:
- Anordnen einer ersten Zellenkontaktplatte in der ersten Öffnung des Zellenbefestigungsrahmens, so dass die Zellenkontaktplatte den Anschluss der ersten Batteriezelle berührt, und
- Verschweißen der Zellenkontaktplatte mit dem Anschluss der ersten Batteriezelle.

## Revendications

1. Ensemble de cellules de batterie (1) comprenant un logement de cellules (40), un cadre de montage de cellules (20, 30), une première cellule de batterie (10-19) et une deuxième cellule de batterie (10-19), dans lequel
la première cellule de batterie (10-19) et la deuxième cellule de batterie (10-19) sont reçus dans le logement de cellules (40) avec une base de chacune de la première cellule de batterie (10-19) et de la deuxième cellule de batterie (10-19) reposant contre un plancher (42) du logement de cellules (40) ;
une borne (131, 133) s'étendant à partir du sommet de la première cellule de batterie (10-19) est reçue dans une première ouverture (203, 303) formée dans le cadre de montage de cellules (20, 30) et une borne (131, 133) s'étendant à partir du sommet de la deuxième cellule de batterie (10-19) est reçue dans une seconde ouverture séparée (203, 303) formée dans le cadre de montage de cellules (20, 30) ; et
le cadre de montage de cellules (20, 30) est fixé au logement de cellules (40) à l'aide d'une fixation (70) qui passe à travers un trou de fixation (205) du cadre de montage de cellules (20, 30) ;
**caractérisé en ce que**
la borne (131, 133) s'étendant à partir du sommet de la première cellule de batterie (10-19) est reçue dans la première ouverture (203, 303) de telle sorte qu'un épaulement (210) du cadre de montage de cellules (20, 30) vienne en butée contre une surface (135) du sommet de la première cellule de batterie (10-19) ;
la borne (131, 133) s'étendant à partir du sommet de la deuxième cellule de batterie (10-19) est reçue dans la seconde ouverture (203, 303) de telle sorte qu'un épaulement (210) du cadre de montage de cellules (20, 30) vienne en butée contre une surface (135) du sommet de la deuxième cellule de batterie (10-19) ;
le cadre de montage de cellules (20, 30) comprend en outre une lèvre (211), la lèvre (211) étant positionnée entre le trou de fixation (205) et un bord du cadre de montage de cellules (20, 30) de telle sorte que la lèvre (211) soit positionnée sur un premier côté du trou de fixation (205) et les première et seconde ouvertures soient positionnées sur un second côté opposé du trou de fixation (205) ;
l'élément de fixation (70) est fixé à un couple cible de telle sorte que la première cellule de batterie (10-19) et la deuxième cellule de batterie (10-19) soient serrées entre le plancher du logement de cellules (40) et l'épaulement (210) du cadre de montage de cellules (20, 30) ;
une force de serrage exercée sur la première cellule et la deuxième cellule par le plancher du logement de cellules (40) et l'épaulement (210) du cadre de montage de cellules (20, 30) est ajustable en ajustant le couple cible ; et
la lèvre (211) du cadre de montage de cellules (20, 30) est comprimée contre le logement de cellules (40) lorsque la fixation (70) est fixée au couple cible.

2. Ensemble de cellules de batterie selon la revendication 1, comprenant en outre au moins une plaque de contact de cellules, dans lequel la au moins une plaque de contact de cellules est reçue dans la première ouverture ou la seconde ouverture du cadre de montage de cellules et est soudée à la borne de la première ou de la deuxième cellule de batterie respective.

3. Ensemble de cellules de batterie selon la revendication 1 ou la revendication 2, dans lequel le cadre de montage de cellules comprend en outre une paroi positionnée entre les première et seconde ouvertures, la paroi faisant saillie dans une direction s'éloignant des bornes des première et deuxième cellules.

4. Ensemble de cellules de batterie selon la revendication 3, dans lequel la paroi présente une hauteur d'au moins environ 1,5 millimètre.

5. Ensemble de cellules de batterie selon l'une quelconque des revendications précédentes, dans lequel, lorsque la fixation est fixé au couple cible, la lèvre est comprimée contre le logement sur un premier côté du trou de fixation et le cadre de montage est espacé du boîtier sur un second côté du trou de fixation.

6. Ensemble de cellules de batterie selon l'une quelconque des revendications précédentes, comprenant en outre une troisième cellule de batterie, dans lequel le troisième cellule de batterie est reçue dans le logement de cellules avec une base de la troisième cellule de batterie reposant contre un plancher du logement de cellules, dans lequel une borne s'étendant à partir du sommet de la troisième cellule de batterie est reçue dans l'une des première ou deuxième ouvertures formées dans le cadre de montage de cellules de telle sorte qu'un épaulement du cadre de montage de cellules vienne en butée contre une surface d'un sommet de la troisième cellule de batterie, et dans lequel le cadre de montage de cellules est fixé au logement de cellules de telle sorte que la troisième cellule de batterie soit serré entre le plancher du logement de cellules et l'épaulement du cadre de montage de cellules.

7. Cadre de montage de cellules de batterie approprié pour une utilisation en tant que cadre de montage de cellules selon l'une quelconque des revendications précédentes, comprenant :
une première ouverture configurée pour recevoir une borne d'une première cellule de batterie dans la première ouverture à partir d'un premier côté du cadre de montage,
une seconde ouverture configurée pour recevoir une borne d'une deuxième cellule de batterie dans la seconde ouverture depuis un premier côté du cadre de montage,
un ou plusieurs épaulements positionnés sur un premier côté du cadre de montage, les un ou plusieurs épaulements étant configurés pour venir en butée contre une surface supérieure de la première cellule de batterie lorsqu'une borne du première cellule de batterie est reçue dans la première ouverture à partir du premier côté du cadre de montage, et pour venir en butée contre une surface supérieure de la deuxième cellule de batterie lorsqu'une borne de la deuxième cellule de batterie est reçue dans la seconde ouverture à partir du premier côté du cadre de montage ; et
une lèvre, la lèvre étant positionnée entre un trou de fixation du cadre de montage de cellules et un bord du cadre de montage de cellules de telle sorte que la lèvre soit positionnée sur un premier côté du trou de fixation et les première et seconde ouvertures soient positionnées sur un second côté opposé du trou de fixation, dans lequel la lèvre fait saillie sur le premier côté du cadre de montage de cellules.

8. Cadre de montage de cellules de batterie selon la revendication 7, dans lequel la au moins une de la première ouverture et de la seconde ouverture est en outre configurée pour recevoir une plaque de contact de cellules à partir d'un second côté opposé du cadre de montage.

9. Cadre de montage de cellules de batterie selon la revendication 7 ou la revendication 8, comprenant en outre une paroi positionnée entre les première et seconde ouvertures, dans lequel la paroi fait saillie sur le second côté du cadre de montage.

10. Cadre de montage de cellules de batterie selon l'une quelconque des revendications 7 à 9, comprenant en outre une paroi positionnée entre le trou de fixation et au moins l'une des première et seconde ouvertures, dans lequel la paroi fait saillie sur le second côté du cadre de montage.

11. Cadre de montage de cellules de batterie selon l'une quelconque des revendications 7 à 10, comprenant en outre une lèvre qui s'étend dans l'une des première ou seconde ouvertures, dans lequel la lèvre est configurée pour supporter une plaque de contact de cellules qui a été placée en contact avec la borne des première ou deuxième cellules de batterie respectives.

12. Procédé de fabrication d'un ensemble de cellules de batterie, comprenant les étapes consistant à :
- placer une première cellule de batterie et une deuxième cellule de batterie dans un logement de cellules avec une base de la première cellule de batterie et une base de la deuxième cellule de batterie venant en butée contre un plancher du logement de cellules,
- placer un cadre de montage de cellules selon la revendication 7 sur la première cellule de batterie de telle sorte qu'une borne de la première cellule de batterie soit reçue dans la première ouverture du cadre de montage de cellule et qu'une borne de la deuxième cellule de batterie soit reçue dans la seconde ouverture du cadre de montage de cellules, et de telle sorte qu'un ou plusieurs épaulements du cadre de montage de cellule viennent en butée contre une surface du sommet de la première cellule de batterie et une surface d'un sommet de la deuxième cellule de batterie, et
- fixer le cadre de montage de cellules au logement de cellules, à l'aide d'une fixation qui passe à travers le trou de fixation du cadre de montage de cellules, en serrant la fixation à un couple cible pour comprimer la lèvre du cadre de montage de cellules contre le logement de cellules et serrer les première et seconde cellules de batterie entre le plancher du logement de cellules et les un ou plusieurs épaulements du cadre de montage de cellules.

13. Procédé selon la revendication 12, comprenant en outre les étapes consistant à :
- placer une première plaque de contact de cellules dans la première ouverture du cadre de montage de cellules de telle sorte que la plaque de contact de cellules vienne en contact avec la borne de la première cellule de batterie, et
- souder la plaque de contact de cellules à la borne de la première cellule de batterie.
